# EUROPÄISCHE PATENTSCHRIFT

(11) **EP 1 183 697 B1**
(45) Veröffentlichungstag und Bekanntmachung des Hinweises auf die Patenterteilung: **20.02.2008**
(21) Anmeldenummer: 01907306.3
(22) Anmeldetag: 07.03.2001
(51) Int. Cl.: H01G 5/00

(54) **BALG FÜR EINEN VAKUUMKONDENSATOR MIT GLEICHMÄSSIGER ELEKTRISCHER LEITSCHICHT**
BELLOWS WITH A UNIFORM ELECTRIC CONDUCTIVE LAYER FOR A VACUUM CAPACITOR
SOUFFLET POUR CONDENSATEUR A VIDE AYANT UNE COUCHE ELECTRIQUEMENT CONDUCTRICE REGULIERE

(30) Priorität: 08.03.2000 CH 449002000
(43) Veröffentlichungstag der Anmeldung: 06.03.2002
(73) Patentinhaber: Comet AG, 3175 Flamatt (CH)
(72) Erfinder: BIGLER, Walter, CH-1714 Heitenried (CH); HUG, Bernhard, CH-3018 Bümpliz (CH)
(74) Vertreter: BOVARD AG
(86) Internationale Anmeldenummer: PCT/CH2001/000141
(87) Internationale Veröffentlichungsnummer: WO 2001/067472

(56) Entgegenhaltungen:
- PATENT ABSTRACTS OF JAPAN vol. 018, no. 556 (E-1620), 24. Oktober 1994 (1994-10-24) & JP 06 204082 A (MEIDENSHA CORP), 22. Juli 1994 (1994-07-22) in der Anmeldung erwähnt

## Beschreibung

Die Erfindung betrifft einen Balg für einen Vakuumkondensator mit gleichmässiger elektrischer Leitschicht sowie ein Verfahren zu dessen Herstellung gemäss den Patentansprüchen 1, bzw. 7.

Balgstrukturen werden in variablen Vakuumkondensatoren verwendet, wo sie als mechanischer Teil neben den elektrischen Eigenschaften eine Dichtheitsfunktion zu erfüllen haben. Sie müssen HF-leitend sein, d.h. eine gute Hochfrequenzleitfähigkeit aufweisen und einer mechanischen und thermischen Dauerbelastung genügen, welche die Langzeiteigenschaften eines Vakuumkondensators bestimmen.

Bekannte Bälge aus Bronze und anderen Legierungen erfahren mit der Zeit eine Materialermüdung und erfüllen die Anforderungen in Bezug auf die Lebensdauer vielfach nicht.

Nach JP-06204082-A ist ein Vakuumkondensator bekannt, der einen Balg aus rostfreiem Stahl mit einer Kupfer- oder Silberbeschichtung verwendet, um die elektrischen Eigenschaften zu verbessern. Die bisher angewendeten Verfahren zur Beschichtung des Balges führen bekanntlich zu sehr unterschiedlichen Schichtdicken, die in der inhomogenen Stromverteilung während des Beschichtungsprozesses begründet sind. Nachteilig sind diese ungleichen Schichtdicken bezüglich der elektrischen Belastbarkeit sowie der Lebensdauer, da bei der mechanischen Belastung die lokal höheren Biegekräfte zu einer Materialermüdung, bzw. zum Bruch der Schicht und später des Trägermaterials führen.

Aufgabe der Erfindung ist es, einen Balg für einen Vakuumkondensator anzugeben, der aus einem Trägermaterial und aus mindestens einer aufgebrachten Schicht besteht, wovon mindestens eine elektrisch leitend ausgebildet ist und sich durch eine möglichst gleichmässige Schichtdicke auszeichnet. Durch die Gleichmässigkeit der Schicht wird eine höhere Lebensdauer erzielt.

Eine weitere Aufgabe der Erfindung besteht in der Herstellung eines derartigen Balges.

Erfindungsgemäss wird diese Aufgabe mit einem Balg gemäss dem Wortlaut nach Patentanspruch 1 und durch ein Verfahren zur Herstellung desselben gemäss dem Wortlaut nach Patentanspruch 7 gelöst.

Die Erfindung wird im Folgenden an Hand von Figuren beschrieben. Es zeigen:
- Fig. 1: Schematische Darstellung eines Balges im Schnitt
- Fig. 2: Schematische Darstellung eines Vakuumkondensators im Schnitt

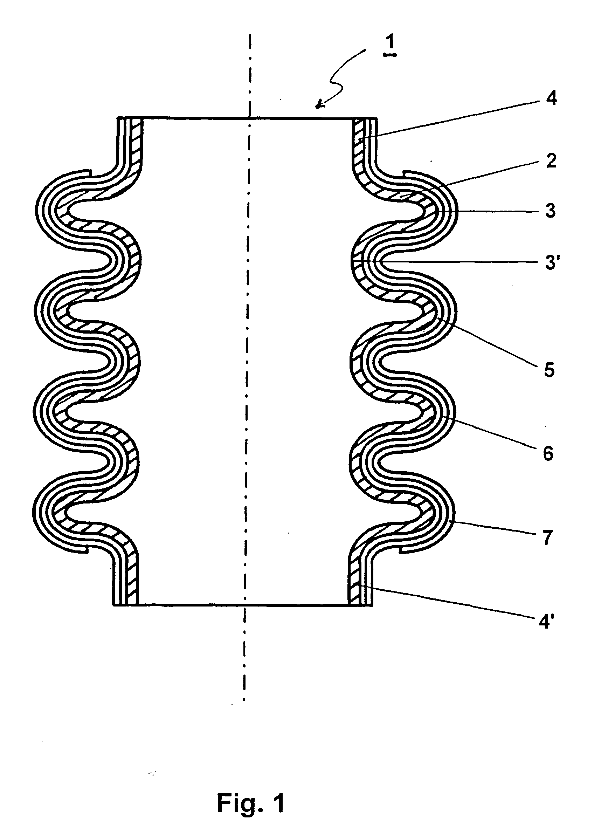

Fig. 1 zeigt in schematischer Darstellung einen Balg im Schnitt. Eine Balgstruktur 1 aus einem Trägermaterial 2 weist eine übliche Rippenstruktur auf mit äusseren und inneren Falten 3 und 3' und zylindrisch ausgebildeten Anschlussteilen 4 und 4'.

Auf der Balgstruktur befinden sich elektrisch leitende Schichten 5 und 6, die für die haftvermittelnden, bzw. elektrischen Eigenschaften vorgesehen sind.

Als Trägermaterial eignen sich Rohre aus rostfreiem Stahl oder aus Ni-Legierungen mit mindestens 65 % Nickel.

Die Schicht 5 hat beispielweise neben der leitenden eine haftvermittelnde Eigenschaft für die Schicht 6.

Die Schicht 5 besteht beispielsweise aus Nickel, Gold oder deren Legierungen bei einer typischen Dicke von 0,2 - 5 µm.

Die elektrische Leitschicht 6 besteht beispielsweise aus Kupfer, Silber, Gold, Palladium oder deren Legierungen, wobei deren Dicke 1 - 50 µm, vorzugsweise 25 µm beträgt. Die Schicht 5 kann auch fehlen, sodass auf dem Trägermaterial lediglich die Schicht 6 aufliegt.

Die Anzahl der elektrisch leitenden Schichten ist keineswegs auf zwei begrenzt. So kann z.B. eine weitere Schicht aufgebracht werden, die eine besondere Korrosionsfestigkeit aufweist, wie dies etwa bei einer dünnen Goldschicht von 0,2 - 0,9 µm der Fall sein kann.

Wesentliche Eigenschaft der Schicht 6 ist deren gleichmässige Schichtdicke, die durch eine Verformung erzielt wird, wie später beschrieben wird.

Auf der Schicht 6 befindet sich eine weitere Schicht 7, die beispielsweise durch eine Schwarzverchromung oder ein Kupferoxid erzeugt wird, welche das thermische Emissionsverhalten der Oberfläche verbessert und die gesamte oder teilweise äussere Oberfläche der Balgstruktur als schwarzen Körper erscheinen lässt. Es hat sich gezeigt, dass dadurch die Wärmeabfuhr durch Strahlung wesentlich gefördert wird, was niedrigere Betriebstemperaturen des Balges zur Folge hat und sich auf die Strombelastbarkeit und auf die Lebensdauer sehr vorteilhaft auswirkt.

Durch eine Ausbildung der Schicht 7 mit rauher Oberfläche wird dieser günstige Effekt verstärkt, was beispielsweise durch Sandstrahlen, Bürsten oder durch chemische Prozesse erzielt werden kann. Die Schicht 7 bedeckt die Rippenstruktur oder Teile davon aber nicht notwendigerweise die Bereiche der Anschlussteile 4, 4'.

Im weiteren wird das Verfahren zur Herstellung eines derartigen Balges beschrieben. Ausgehend von einem Rohr als Trägermaterial, das vorzugsweise aus rostfreiem Stahl besteht, werden auf dieses die mindestens eine elektrisch leitende Schicht 5, 6 aufgebracht, was z.B. galvanisch erfolgen kann.

Während die Wandstärken der Rohre ca. 50 - 200 µm betragen, bewegen sich die Schichtdicken je nach Funktion im allgemeinen von 1 - 50 µm.

Mit dem Aufbringen dieser Schichten 5, 6 wird ein Verbundteil, resp. ein Verbundrohr gebildet, das einem Verformungsprozess in bekannter Weise unterworfen wird, wodurch die Balgstruktur 1 erzielt wird.

Bei einer derartigen Verformung bleiben die Schichtdicken des Verbundrohres im wesentlichen gleichmässig. Es hat sich gezeigt, dass die Abweichungen der Schichtdicke vom Mittelwert weniger als +/- 50 %, vorzugweise weniger als +/- 10 %, betragen. Diese Gleichmässigkeit bedeutet gegenüber einem galvanischen Auftragen der Schicht erst nach der Verformung einen grossen Vorteil.

Die erfindungsgemässe Verformung liefert eine Balgstruktur, die nachgearbeitet wird, wobei dies im Aufbringen einer weiteren Schicht 7 zur weiteren Vergütung erfolgen kann, gefolgt von Reinigungschritten und dgl.. Die weitere Schicht 7 kann auch vorgängig zur Verformung aufgebracht werden.

Die Nacharbeit kann auch darin bestehen, die Anschlussteile 4, 4' mechanisch in eine optimale Form zu bringen.

Danach liegt der Balg einbaufertig vor und wird in einem Vakuumkondensator montiert.

Alternativ zu einer galvanischen Beschichtung zum Aufbringen der elektrisch leitenden Schichten wird mindestens ein weiteres sehr dünnes Rohr auf das Trägermaterial, bzw. das erste Rohr aufgezogen, bzw. aufgestülpt, wonach dann der Verformungsschritt erfolgt. Die Nacharbeit der Balgstruktur erfolgt in ähnlichem Rahmen wie bereits beschrieben.

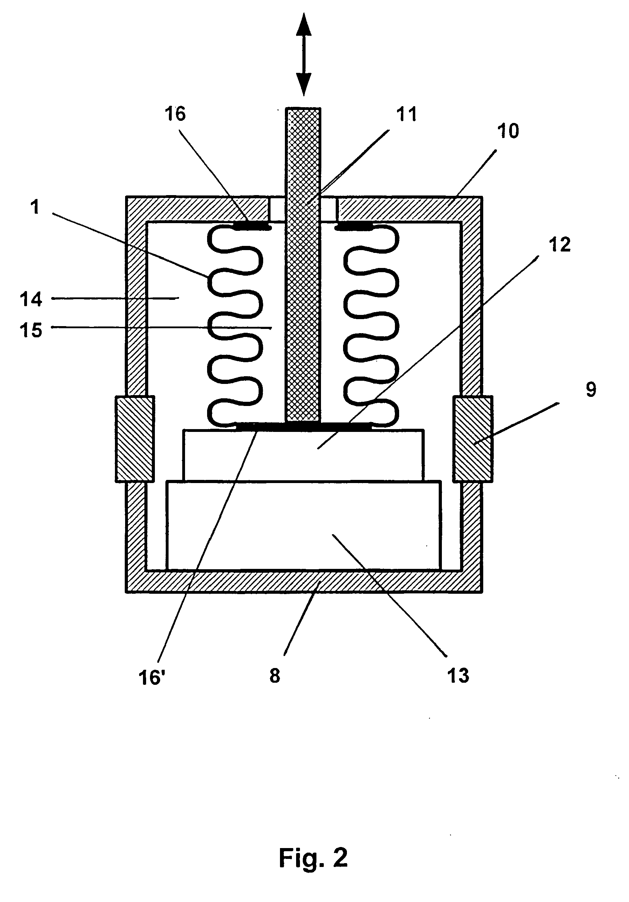

Fig. 2 zeigt den schematischen Aufbau eines variablen Vakuumkondensators. Ein fixer Elektrodenblock 13 ist mechanisch und elektrisch mit dem unteren Teil 8 des Gehäuses verbunden, das gleichzeitig einen äusseren elektrischen Anschluss des Kondensators darstellt. Über einen ringförmigen Isolator 9 ist der untere Teil 8 des Gehäuses mit dem oberen Teil 10 des Gehäuses dicht verbunden. Über eine Stange 11, die an ihrem unteren Ende mit einem variablen Elektrodenblock 12 befestigt ist, wird dieser von aussen her mehr oder weniger tief in den fixen Elektrodenblock 13 eingetaucht, wodurch sich die gewünschte Kapazität einstellen lässt. Zur Verbesserung der elektrischen Eigenschaften befindet sich im inneren Raum 14 ein Vakuum, das vom Umgebungsdruck 15 durch einen Balg, resp. Federbalg 1 getrennt ist. Der Federbalg ist am einen Ende 16 mit dem oberen Teil 10 des Gehäuses und am anderen Ende 16' mit dem variablen Elektrodenblock 12 gasdicht verbunden. Der Federbalg sichert eine hohe vertikale Beweglichkeit der Stange 11 und des variablen. Elektrodenblockes 12 und ist gleichzeitig so ausgelegt, dass er dem Druckunterschied zwischen dem inneren Raum 14 und dem Umgebungsdruck 15 stand hält. Der Federbalg 1 besitzt dabei gleichzeitig auch eine hohe HF-elektrische Leitfähigkeit, durch die der variable Elektrodenblock 12 mit dem zweiten elektrischen Anschluss 10 verbunden ist.

Die Vorteile der erfindungsgemässen, gleichmässigen Schichtdicke liegen im dadurch bedingten regelmässigen Stromlinien- und Stromdichteverlauf, was zu einer gleichmässigen Temperaturbelastung und zur Vermeidung von lokalen Überhitzungen führt.

Auch die dünneren Bereiche der elektrisch leitenden Schicht gewährleisten noch eine ausreichende Stromleitung.

Ein weiterer Vorteil der erfindungsgemässen, gleichmässigen Schichtdicke besteht in der regelmässigen mechanischen Belastung der Balgstrukturen. Daraus ergibt sich eine deutlich verbesserte Lebensdauer des Balgs und erlaubt so eine wesentlich höhere gesamte Zyklenzahl des Balgs und damit des Vakuumkondensators. Diese kommt dann zum Tragen, wenn der gesamte Kapazitätsbereich durchfahren wird.

Die anschliessend beschriebenen Beispiele zeigen die erzielbare Homogenität der Schichtdicken und demonstrieren die deutlich verbesserte Lebensdauer.

### Beispiel 1: Verkupferter Federbalg aus rostfreiem Stahl.

Auf ein 100 µm dickes, rostfreies Stahlrohr wurde zur Verbesserung der Haftfähigkeit vorgängig eine 0,8 µm dicke Schicht aus Au aufgetragen, gefolgt von einer 25 µm dicken Leitschicht aus Kupfer. Danach wurde das so vorbereitete Rohr nach bekanntem Verfahren zur einer Balgstruktur verformt und in einen Vakuumkondensator entsprechend Fig. 2 eingebaut. Temperaturmessungen unter hochfrequenter Strombelastung bei 13,5 MHz haben gezeigt, dass ein derartig gefertigter Vakuumkondensator gegenüber einem bekannten Vakuumkondensator mit einem Bronzebalg bezüglich seiner elektrischen Belastbarkeit genauso gut ist, bzw. diesen übertrifft. Das heisst, dass die Regelmässigkeit der Schichtdicken im Ergebnis derjenigen eines homogenen metallischen Leiters entspricht. Die Messung der Schichtdicke hat ergeben, dass die Abweichungen der Schichtdicke vom Mittelwert weniger als +/- 10 % betrugen.

### Beispiel 2: Federbalg mit verbesserter Wärmeabstrahlung.

Auf ein 80 µm dickes, rostfreies Stahlrohr wurde eine 20 µm dicke Leitschicht aus Kupfer aufgebracht. Zur Verbesserung der Haftfähigkeit wurde eine Schicht aus Ni von 1,3 µm Dicke gewählt. Danach wurde das so vorbereitete Rohr nach bekanntem Verfahren zur einer Balgstruktur verformt und in einen Vakuumkondensator entsprechend Fig. 2 eingebaut. Zur verbesserten Wärmeabstrahlung wurde eine weitere Schicht als dunkle Kupferoxidschicht von 1,0 µm Dicke beaufschlagt. Temperaturmessungen unter Strombelastung wurden im Vergleich zu Beispiel 1 bei 40 MHz durchgeführt. Es zeigt sich, dass ein derartig gefertigter, mit einer weiteren Schicht versehener Vakuumkondensator höher belastbar ist.

Langzeitlebensdauertests haben gezeigt, dass bei zyklischer, axialer Belastung des erfindungsgemässen Balgs die Lebensdauer im Vergleich zu Federbälgen mit anderen, sonst üblichen Materialien wie z.B. Bronze mindestens eine Verdoppelung der Lebensdauer erzielt werden kann.

## Patentansprüche

1. Balg für einen Vakuumkondensator **gekennzeichnet dadurch, dass** eine Balgstruktur (1) aus einem Trägermaterial (2) und mindestens einer Schicht (5, 6, 7) besteht, wovon mindestens eine Schicht (5, 6) elektrisch leitend ausgebildet ist und über die ganze Balgstruktur (1) eine gleichmässige Dicke aufweist.

2. Balg nach Anspruch 1, **gekennzeichnet dadurch, dass** das Trägermaterial (2) aus rostfreiem Stahl oder einer Ni-Legierung besteht, wobei letztere mindestens 65 % Nickel aufweist.

3. Balg nach Anspruch 1 oder 2, **gekennzeichnet dadurch, dass** die mindestens eine elektrisch leitende Schicht (5, 6) aus Kupfer, Silber, Gold, Palladium oder deren Legierungen besteht, wobei deren Dicke 1 - 50 µm, vorzugsweise 25 µm beträgt, und dass die Abweichungen der Schichtdicke vom Mittelwert weniger als +/- 50 %, vorzugsweise weniger als +/- 10 %, betragen.

4. Balg nach einem der Ansprüche 1 - 3, **gekennzeichnet dadurch, dass** sich auf der mindestens einen elektrisch leitenden Schicht (5, 6) mindestens eine weitere Schicht (7) befindet, die der Unterstützung der Wärmeabstrahlung dient und die Balgstruktur (1) ganz oder teilweise bedeckt.

5. Balg nach einem der Ansprüche 1 - 4, **gekennzeichnet dadurch, dass** die mindestens eine weitere Schicht (7) aus einer Schwarzverchromung oder einer Kupferoxidschicht besteht und im wesentlichen als schwarzer Körper ausgebildet ist, und dass die Dicke dieser Schicht 0,1 - 10 µm, vorzugsweise 2 µm beträgt.

6. Balg nach einem der Ansprüche 1 - 5, **gekennzeichnet dadurch, dass** die mindestens eine weitere Schicht (7) eine rauhe Oberfläche aufweist.

7. Verfahren zur Herstellung eines Balges für einen Vakuumkondensator nach einem der Ansprüche 1 - 6, **gekennzeichnet dadurch, dass** als Trägermaterial (2) ein Rohr verwendet wird, auf welches mindestens eine elektrisch leitende Schicht (5, 6) aufgebracht wird, dass das so mit der Schicht (5, 6) versehene und beschichtete Rohr verformt wird, wobei eine Balgstruktur (1) erzielt wird, und dass die Balgstruktur nachgearbeitet und in einen Vakuumkondensator montiert wird.

8. Verfahren nach Anspruch 7, **gekennzeichnet dadurch, dass** die mindestens eine elektrisch leitende Schicht (5, 6) aus mindestens einem weiteren Rohr aus mindestens einem weiteren Material besteht, mit welchem das Trägermaterial (2) überzogen wird, wobei die Wandstärke dieses weiteren Rohres nur einen Bruchteil derjenigen des Trägermaterials beträgt, wodurch ein Verbundrohr gebildet wird.

9. Verfahren nach Anspruch 7 oder 8, **gekennzeichnet dadurch, dass** bei der Nacharbeitung des verformten Rohres die mindestens eine weitere Schicht (7) zur Erhöhung der Wärmeabfuhr durch Strahlung aufgebracht wird und die darunterliegende Schicht (6) ganz oder teilweise bedeckt.

10. Verfahren nach einem der Ansprüche 7 - 9, **gekennzeichnet dadurch, dass** die mindestens eine weitere Schicht (7) zur Erhöhung der Wärmeabfuhr durch Strahlung vor der Verformung aufgebracht wird.

11. Verfahren nach einem der Ansprüche 7 - 10, **gekennzeichnet dadurch, dass** die mindestens eine weitere Schicht (7) in einer Schwarzverchromung oder als Kupferoxidschicht aufgebracht wird.

## Claims

1. Bellows for a vacuum capacitor, **characterised in that** a bellows structure (1) comprises a carrier material (2) and at least one layer (5, 6, 7), of which at least one layer (5, 6) is constructed in an electrically conductive manner and has a uniform thickness over the entire bellows structure (1).

2. Bellows according to claim 1, **characterised in that** the carrier material (2) consists of stainless steel or an Ni alloy, the latter containing at least 65% nickel.

3. Bellows according to claim 1 or 2, **characterised in that** the at least one electrically conductive layer (5, 6) consists of copper, silver, gold, palladium, or their alloys, their thickness being 1-50 µm, preferably 25 µm, and that the deviations of the layer thickness from the mean are less than +-50%, preferably less than +-10%.

4. Bellows according to one of the claims 1-3, **characterised in that** located on the at least one electrically conductive layer (5, 6) is at least one additional layer (7) that serves the support of the heat radiation and covers the bellows structure (1) in its entirety or in part.

5. Bellows according to one of the claims 1-4, **characterised in that** the at least one additional layer (7) consists of a black chrome plating or a copper oxide layer, and is constructed substantially as a black body, and that the thickness of this layer is 0.1-10 µm, preferably 2 µm.

6. Bellows according to one of the claims 1-5, **characterised in that** the at least one additional layer (7) has a rough surface.

7. Method for producing a bellows for a vacuum capacitor according to one of the claims 1-6, **characterised in that** as a carrier material (2) a pipe is used, onto which at least one electrically conductive layer (5, 6) is applied, that the pipe thus provided with the layer (5, 6) and coated is shaped, a bellows structure (1) being achieved, and that the bellows structure is finished and mounted in a vacuum capacitor.

8. Method according to claim 7, **characterised in that** the at least one electrically conductive layer (5, 6) comprises at least one additional pipe of at least one additional material with which the carrier material (2) is coated, the wall thickness of this additional pipe being only a fraction of that of the carrier material, resulting in a composite pipe.

9. Method according to claim 7 or 8, **characterised in that** during the finishing of the shaped pipe the at least one additional layer (7) is applied for increasing the heat emission through radiation, and covers the underlying layer (6) in its entirety or partially.

10. Method according to one of the claims 7-9, **characterised in that** the at least one additional layer (7) for increasing the heat emission through radiation is applied prior to the shaping.

11. Method according to one of the claims 7-10, **characterised in that** the at least one additional layer (7) is applied as a black chrome plating or as a copper oxide layer.

## Revendications

1. Soufflet dans un condensateur sous vide, **caractérisé en ce qu'**une structure de soufflet (1) se compose d'un matériau support (2) et d'au moins une couche (5, 6, 7), dont au moins une couche (5, 6,7) est électriquement conductrice et présente une épaisseur régulière sur toute la structure de soufflet (1).

2. Soufflet selon la revendication 1, **caractérisé en ce que** le matériau support (2) se compose d'un acier inoxydable ou d'un alliage Ni, ce dernier comportant au moins 65 % de nickel.

3. Soufflet selon la revendication 2, **caractérisé en ce qu'**au moins la couche électriquement conductrice (5, 6) se compose de cuivre, d'argent, d'or de palladium ou de leurs alliages, dont l'épaisseur est comprise entre 1 et 50 µm, de préférence 25 µm et **en ce que** les divergences entre l'épaisseur de couche et la valeur moyenne est inférieure à +/- 50 % de préférence inférieure à+/-10%.

4. Soufflet selon l'une des revendications 1 à 3, **caractérisé en ce qu'**il se trouve sur au moins une couche électriquement conductrice (5, 6) une autre couche (7) qui sert à soutenir la radiation de chaleur et qui recouvre entièrement ou partiellement la structure de soufflet (1).

5. Soufflet selon l'une des revendications 1 à 4, **caractérisé en ce qu'**au moins l'autre couche (7) se compose d'un chromage noir ou d'une couche d'oxyde de cuivre et est réalisée sensiblement comme un corps noir et **en ce que** l'épaisseur de cette coupe est comprise entre 0,1 et 10 µm, de préférence est de 2 µm

6. Soufflet selon l'une des revendications 1 à 5, **caractérisé en ce qu'**au moins l'autre couche (7) présente une surface rugueuse.

7. Procédé pour la fabrication d'un soufflet pour un condensateur sous vide selon l'une des revendications 1 à 6, **caractérisé en ce qu'**il est utilisé en tant que matériau support (2) un tube sur lequel est appliquée au moins une couche électriquement conductrice (5, 6) et **en ce que** le tube muni et recouvert de la couche (5, 6) est déformé, une structure de soufflet (1) étant obtenue et **en ce que** la structure de soufflet est retravaillée et est montée dans un condensateur sous vide.

8. Procédé selon la revendication 7, **caractérisé en ce qu'**au moins une couche électriquement conductrice (5,6) se compose d'au moins un autre tube en au moins un autre matériau, avec lequel le matériau support (2) est recouvert, l'épaisseur de ce tube ne représentant qu'une fraction de celle du matériau support, formant ainsi un tube composite.

9. Procédé selon la revendication 7 ou 8, **caractérisé en ce que** lors du retraitement du tube déformé, une autre couche (7) est appliquée par radiation pour augmenter l'évacuation de la chaleur et la couche se trouvant en dessous (6) étant recouverte partiellement ou entièrement.

10. Procédé selon l'une des revendications 7 à 9, **caractérisé en ce qu'**au moins une autre couche (7) est appliquée avant la déformation par radiation pour augmenter l'évacuation de la chaleur.

11. Procédé selon l'une des revendications 7 à 10, **caractérisé en ce qu'**au moins une autre couche (7) est appliquée dans un chromage noir ou en tant que couche d'oxyde de cuivre.
